# Europäisches Patentamt

(19) **European Patent Office**

**Office européen des brevets**

(11) Publication number: **0 110 650**
**B1**

(12) **EUROPEAN PATENT SPECIFICATION**

(45) Date of publication of patent specification: **24.09.86**

(21) Application number: **83307103.8**

(22) Date of filing: **21.11.83**

(51) Int. Cl.⁴: **C 01 B 33/28, B 01 J 29/28**

(54) **Preparation of zeolites.**

(30) Priority: **22.11.82 US 443501**

(43) Date of publication of application:
**13.06.84 Bulletin 84/24**

(45) Publication of the grant of the patent:
**24.09.86 Bulletin 86/39**

(84) Designated Contracting States:
**BE DE FR GB IT NL SE**

(56) References cited:
**EP-A-0 001 695**
**US-A-3 808 326**
**US-A-3 941 871**
**US-A-4 175 114**
**US-A-4 257 885**

(73) Proprietor: **MOBIL OIL CORPORATION**
**150 East 42nd Street**
**New York New York 10017 (US)**

(72) Inventor: **Chu, Pochen**
**1173 Ollerton Road**
**West Deptford, N.J. 08066 (US)**
Inventor: **Rosinski, Edward Joseph**
**Box a**
**Pedricktown, N.J. 08067 (US)**

(74) Representative: **Grundy, Derek George Ritchie**
**et al**
**CARPMAELS & RANSFORD**
**43, Bloomsbury Square**
**London WC1A 2RA (GB)**

Courier Press, Leamington Spa, England.

## Description

This invention relates to the preparation of zeolites, notably those relatively siliceous zeolites possessing a constraint index of 1 to 12, typified by zeolites having the structure of ZSM-5. In a particular aspect of the invention these zeolites manifest a novel morphology.

US—A—3,941,871 discloses the special case of ZSM-5 in which the alumina content is vanishly small, being only that resulting from impurities in the reagents used in synthesis.

It is further known that zeolites such as ZSM-5 and ZSM-11 can be formed hydrothermally from reaction mixtures of elevated pH containing sources of silica, alumina and alkali metal oxide in the absence of organic cations. That result is achieved by supplying seeds of the zeolite to a mixture of sources as above described, as in US—A—4,175,114.

It is also well known that zeolites are not necessarily aluminosilicates since other elements may serve in place of silicon and aluminium whilst preserving the lattice geometry characteristic of individual zeolitic structures. Germanium, for example, is a well recognized substitute for silicon in the crystal framework of tetrahedra linked by sharing of oxygen atoms, whilst gallium is known as replacement for aluminium. Iron, phosphorus and boron have also been reported as zeolite lattice elements. A method for preparing various zeolites, including ZSM-5, which contain tetrahedrally coordinated transition metals in the crystal framework is described in US—A—3,530,064 and 4,163,028.

According to the present invention a process for preparing a zeolite having a constraint index in the range of 1 to 12, a silica/alumina mole ratio of at least 12 and a nitrogen content of less than 0.2% wt. in the water-washed, uncalcined state comprises forming an intimate mixture of seed crystals of that zeolite, colloidal silica and water in which mixture no alkali or non-colloidal silica added as such is present and the weight ratio of seeds to silica is in the range 1:200 to 1:10, adding aqueous alkali to said mixture to form an aqueous reaction mixture of pH 7.5 to 13 conducive to formation of said zeolite, and hydrothermally reacting said reaction mixture with agitation until crystals of the zeolite are formed.

The preferred mole ratio $SiO_2/(SiO_2+H_2O)$ of said reaction mixture is from 26 to 40, and advantageously the reaction mixture contains, on a seed-free basis, no more than 85% wt. of water. Mulling is a favoured technique for forming the intimate mixture, which usually contains no alumina added as such. Usually the reaction mixture contains no organic cations other than such as may have been added already associated with the seed.

The invention can provide zeolites of unique morphology and enhanced catalytic activity resulting from synthesis in a reaction mixture prepared by first mixing a silica of colloidal dimensions, namely less than about 0.1 microns in size on a weight average basis, with seeds of a crystalline zeolite having an X-ray powder diffraction pattern which substantially corresponds with that of the desired zeolite product. The well mixed blend of seeds and colloidal silica is then mixed with a caustic solution to adjust the ratios of caustic oxide, silica and water to values suitable to synthesis of the desired zeolite as described in the prior art or thereafter determined. The reaction mixture may also contain a source or sources of alumina, gallium oxide, oxides of boron or the transition metals, etc., depending on the desired chemical composition of the crystalline product. It will be understood that the invention contemplates substitution of germanium oxide for silica in accordance with the general knowledge in this art and that references herein to colloidal silica are inclusive of colloidal germanium oxide.

The reaction mixture is maintained at hydrothermal conditions for crystallization of the desired zeolite until the crystalline product is formed, and the product frequently takes the form of crystalline platelets, attached at one edge to a common base or core, bearing a fanciful resemblance to leaves of the lettuce plant. The observed high catalytic activity of this form of zeolite may be attributable to the relatively short paths through the crystal platelets which enhance diffusivity.

The annexed drawings present scanning electron photomicrographs which compare the morphology of zeolites prepared in accordance with this invention with that of zeolites prepared by prior art techniques. Figures 1 and 2 are photomicrographs of zeolite ZSM-5 prepared by the examples set out hereinafter, Figures 3, 4 and 5 of zeolites prepared by previously practised methods.

The invention provides a general technique for the manufacture of synthetic zeolites which is applicable to all synthetic zeolites of different crystal structure and different chemical composition. Thus the invention contemplates manufacture of the wide variety of crystalline alumosilicate and aluminogermanate molecular sieve zeolites and isomorphs thereof wherein aluminium content is reduced to the minimum dictated by impurities of reagents or is replaced in whole or part by other elements. Among the elements so replacing aluminium, mention is specifically made of boron, phosphorus, titanium, vanadium, chromium, manganese, iron, cobalt, nickel, copper, gallium, molybdenum, technetium, ruthenium, rhodium, palladium, indium, lanthanum, tungsten, rhenium, osmium, iridium, platinum and the rare earth metals.

The essence of the invention resides in the order of mixing three reagents previously utilized in zeolite synthesis. Seeds of a zeolite having an X-ray powder diffraction pattern substantially conforming to that of the desired product are thoroughly mixed with colloidal size particles (less than about 0.1 micron size on a weight average basis) of silica or germanium oxide, preferably amorphous. The well mixed blend of seeds and colloidal silica (and/or germanium oxide) is then stirred with water and an alkalizing agent such as caustic soda, ammonia, etc. to provide a reaction mixture having the ratios of reagents suitable to the desired zeolite and the mixture is maintained at the hydrothermal condition for the desired product.

If an aluminosilicate or aluminogermanate is desired, a source of alumina, e.g. sodium aluminate, will also be included. For preparation of zeolites containing other elements in the crystal framework, compounds of those elements will be supplied to the reaction mixture by any suitable compound of the substitute element.

Templates such as amines and GpVA quaternary compounds may be used in the reaction mixtures of this invention but are preferably avoided as unnecessary expense and imposing unnecessary processing steps. In the preferred embodiments of the invention, the reaction mixture is substantially free or organic compounds of nitrogen or phosphorus, particularly those which form cations in aqueous solution. In particularly preferred methods, the invention contemplates reaction mixtures which consist essentially of inorganic reagents in the sense that any organic material present is adventitious and/or does not enter into or direct the crystallization process.

The product obtained according to preferred embodiments of the invention is substantially free of organic cations and is of low nitrogen content. It is difficult to completely avoid nitrogen compounds in commercial operations and it may be desirable on occasion, to use nitrate salts for supply of some elements desired in crystal framework. However, the preferred zeolite will analyze less than 0.2 weight percent nitrogen after thorough water washing and before calcination.

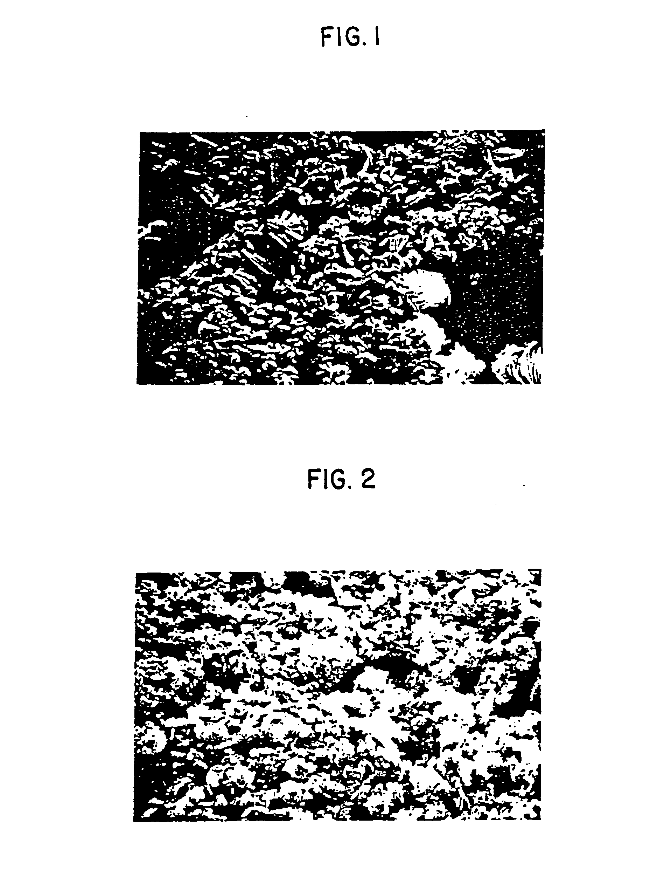

The reason for the peculiar morphology of the products of the invention is not fully understood. The profusion of thin platelets clearly visible in Figure 1 could result from nucleation at many points on a seed crystal from a nutrient reaction mixture rich in silica by reason of the premixing step. The substantial absence of other crystal forms may be attributable to absence of other types of nucleation in the absence of an organic template such as tetrapropylammonium bromide. Such explanation is, however, speculative.

As stated above, the source of silica in practice of this invention is finely divided solid silica of colloidal dimensions, preferably amorphous. Several commercial products of that nature are available under such tradenames as Hi-Sil, Ludox, Cabosil, Degussa, Quso, etc. Most of these are supplied in the form of very fine powders, others, notably Ludox, are stabilized aqueous dispersions containing about 40 weight percent $SiO_2$. Although sodium silicate solutions (water glass) are often employed as the silica source in prior art preparations of zeolites, those solutions are not used in the first step of synthesis according to this invention. It is possible to use some sodium silicate in adjusting the pH and supplying sodium for cations and additional silica in the final stage of the synthesis, but it is preferred that the only source of silica in the preparation be colloidal solid silica of the nature described.

Such colloidal solid silica is thoroughly mixed with seed crystals conforming to the desired product zeolite. The seeds may be a portion of the wet product as separated (e.g., filtered) from a previous preparation or may be crystals which have been ion exchanged and/or calcined in any desired manner. The quantity of seeds employed may vary within wide limits, at least 0.5 weight percent of seeds based on weight of the colloidal solid silica to be mixed with the seeds. The amount of seed can be important in control of the size of the product.

In general it has been found that lower reaction temperatures favor production of zeolites of smaller crystal size in practice of this invention. A further control can be imposed by control of quantity of seed crystals. At relatively small proportions of seed, about 1 to 5% by weight, the process yields product of larger size than the seeds. At larger quantities of seed, in the approximate range of 3 to 10%, the process tends to yield a product of about the same crystal size as the seed crystals.

In using aqueous suspensions of silica, such as Ludox, the seeds are added to the aqueous suspension with stirring adequate for thorough mixing. A convenient method for mixing seeds with a dry powder of colloidal silica is to add enough water to form a mullable "dough", say 5 to 15, preferably about 10% by weight of water based on total solids and mull the mixture until the two solids are thoroughly dispersed throughout the whole.

The well mixed blend of seeds and colloidal silica particles is then added to an alkaline aqueous solution containing sufficient alkali metal or ammonium hydroxide for the mixture with blended solids to have a pH value between about 7.5 and about 13.0. In addition to the function of controlling pH, the alkali also serves to supply the necessary cations to balance such electronegative character as may be found in the crystal framework. Elements other than silicon or germanium desired in the crystal framework will be supplied to the aqueous alkaline solution, preferably before adding the blended solids, as water soluble compounds such as sulfates, nitrates, halides or other salts. In some cases, it may be found more convenient to add the additional element as an anion, e.g. aluminates, borates, chloroplatinates, etc.

The invention makes it possible to obtain high yields of zeolite product from reaction mixtures containing a high proportion of reactive components. It is preferred that the quantity of such components, silica or germanium oxide plus alkali metal or ammonium oxide plus alumina if present or replacement for alumina if present, constitute at least about 15% by weight of the whole reaction mixture.

The reaction mixture is agitated to promote mixing and raised in temperature to hydrothermal conditions conducive to formation of the desired zeolite, in the general range of 75 to 200°C. Agitation sufficient to maintain the dispersion is continued while the mixture is maintained under autogenous pressure until the zeolite crystals are formed, a period of a few hours to several days, all as well known in the art.

In preferred embodiments of the invention, the reaction mixture is essentially free of organic reagents such as the amines and quaternary ammonium compounds used in many prior art preparations. In those embodiments, the invention avoids the consumption of expensive organic reagents and avoids the processing steps necessary to remove organic cations from the product. In its broader aspects, the invention contemplates reaction mixtures containing such organic reagents although no advantages are now known to be realized from adding organics. If used, the organic reagents may be added to the aqueous alkaline solution before addition of the blend of colloidal silica and seeds.

After the crystalline product is formed, the reaction mixture is discharged from the autoclave or other reaction vessel and the product crystals are separated from the mother liquor as by filtration for water washing, ion exchange, drying and/or calcination depending on the intended use of the product zeolite. It is convenient to set aside a portion of the product at this stage for use as seed in a subsequent batch with or without finishing steps as briefly outlined above. Preferably seed for a subsequent batch is only water washed to remove occluded mother liquor.

The zeolite can have the alkali metal associated therewith replaced by a wide variety of other cations according to techniques well-known in the art. Typical replacing cations include hydrogen, ammonium and metal cations including mixtures of the same. Of the replacing metallic cations, particular preference is given to cations of metals such as rare earth metal, manganese and calcium, as well as metals of Groups II and VIII of the Periodic Table, e.g., zinc or platinum.

Regardless of the cations replacing the sodium in its synthesized form, the spatial arrangement of the silicon and oxygen atoms and optionally others which form the basic crystal lattice of the zeolite remains essentially unchanged by the described replacement of sodium or other alkali metal as determined by taking an X-ray powder diffraction pattern of the ion-exchanged materials. Such X-ray diffraction pattern of the ion-exchanged product reveals a pattern substantially the same as that observed prior to ion exchange with some minor changes possible in intensities and/or line positions.

Catalysts comprising zeolites prepared according to the invention may be formed in a wide variety of particular sizes. Generally speaking, they can be in the form of a powder, a granule, or a molded product, such as extrudate having particle size sufficient to pass through a 2 mesh (Tyler) screen and be retained on a 4 mesh (Tyler) screen. In cases where the catalyst is molded, such as by extrusion, the alumino-silicate can be extruded before drying or dried or partially dried and then extruded.

As in the case of many adsorbents and catalysts, it is frequently desirable to composite the zeolite with another material resistant to the temperatures and other conditions employed in gas contacting and in organic conversion processes. Such materials include active and inactive materials and synthetic or naturally occurring zeolites as well as inorganic material such as clays, silica and/or metal oxides, as fully set forth in our EP—A—1695.

Catalysts comprising zeolites prepared according to the invention are useful in cracking and hydrocracking, and in other petroleum refining processes such as isomerization of n-paraffins and naphthenes, polymerization of compounds containing an olefinic or acetylenic carbon-to-carbon linkage such as isobutylene and butene-1, reforming, alkylation, isomerization of polyalkyl substituted aromatics, e.g., ortho-xylene, and disproportionation of aromatics, such as toluene, to provide a mixture of benzene, xylenes and higher methylbenzenes. The catalysts have exceptional high selectivity and, under the conditions of hydrocarbon conversion, provide a high percentage of desired products relative to total products compared with known hydrocarbon conversion catalysts.

The zeolites can be used either in the alkali metal form, e.g., the sodium form, in the ammonium form, the hydrogen form or another univalent or multivalent cationic form. Preferably, one or the other of the last two forms is employed. They can also be used in intimate combination with a hydrogenating component such as tungsten, vanadium, molybdenum, rhenium, nickel, cobalt, chromium, manganese, or a noble metal such as platinum or palladium where a hydrogenation/dehydrogenation function is to be performed. Such component can be exchanged into the composition, impregnated therein or physically intimately admixed therewith. Such component can be impregnated in or onto the zeolite, such as, for example, by, in the case of platinum, treating the zeolite with a platinum metal-containing ion. Thus, suitable platinum compounds include chloroplatinic acid, platinous chloride and various compounds containing the platinum amine complex.

When it is employed either as an adsorbent or as a catalyst in one of the aforementioned processes, the zeolite should be at least partially dehydrated. This can be done by heating to a temperature in the range of 200 to 600°C, in an atmosphere such as air, nitrogen, etc. and at atmospheric or subatmospheric pressures for between 1 minute and 48 hours. Dehydration can also be performed at lower temperatures merely by placing the catalyst in a vacuum, but a longer time is required to obtain a sufficient amount of dehydration.

Zeolites prepared in accordance with the invention are characterized by high silica (or germania) content, the mol ratio of silica to other elements of tetrahedral coordination in the crystal framework being at least 12 and up to 1000 or even several thousand. As previously noted, the presence of impurities (notably alumina) in available reagents has prevented synthesis of pure silica crystals, but zeolites of extremely small alumina content have been observed. Typical such zeolites are identified as ZSM-5, ZSM-11, ZSM-12, ZSM-35 and ZSM-38. The early preparations of those high silica zeolites were conducted with the aid of quaternary ammonium and phosphonium compounds which resulted in crystalline zeolites having those organic cations at the cationic sites of the zeolite. More recently, it has been demonstrated that these high silica zeolites can be prepared in non-organic form, i.e. free of organic cations in the as-synthesized or uncalcined state.

Such zeolites of high silica content have unusual characteristics for catalysis, adsorption, etc. The zeolites are increasingly hydrophobic as proportion of silica is increased. This property becomes important in selective adsorption, permitting separation of impurities from water. In catalysis, the hydrophobic characteristic seems to favor formation of hydrocarbons from compounds containing oxygen with rejection of water.

Zeolites having constraint indices of 1—12 are excellent catalysts for removal of straight and slightly branched paraffins and olefins to improve properties of petroleum fractions, as by dewaxing distillate fuels and lubricants or by upgrading the octane number of naphthas. They are also useful in catalysis of reactions involving elemental hydrogen when combined with a hydrogenation component such as a Group VIII metal, e.g. hydrocracking, particularly at low pressures below about 104 bar (1500 psia) down to 21—35 bar (300—500 psia). These constrained access zeolites alone are effective acid catalysts in the hydrogen form or after ion exchange with polyvalent metals. As such they are useable in the full range of so-called carbonium ion reactions, including cracking, isomerization, alkylation, dialkylation, polymerization, etc.

### Example 1

Crystalline zeolite having the crystal structure of ZSM-5 by X-ray powder diffraction pattern was prepared by use of a precipitated silica available from PPG Industries Chemical Division under the brand name "Hi-Sil". On a dry basis, Hi-Sil contains 94 wt.% silica, 1.7 wt.% sodium chloride, 0.80 wt.% calcium as oxide, 0.55 wt.% aluminum as oxide ($Al_2O_3$) and lesser amounts of other inorganic impurities. Typical average particle size of Hi-Sil is 0.022 microns, less than 1 wt.% retained on U.S. Standard 325-mesh screen (sieve opening 0.044 mm), e.g. 0.07 wt.% on 325-mesh (sieve opening 0.044 mm). This very finely divided material provides a large surface area, typically 149 m$^2$/g. (BET).

In preparing medium size range ZSM-5 (0.2—1.0 microns) by the process of this invention, one hundred grams of low sodium ZSM-5 crystals (silica/alumina of 70) in the range of 0.02 to 0.05 microns was dispersed in 6.4 kg (14 pounds) of water in an autoclave. Those "seed" crystals were in the "as synthesized" state resulting from water washing of crystals separated by filtration from the mother liquor in which they were formed. The seed crystals had not been subjected to ion exchange (other than that inherent in water washing) or to calcination.

2.3 kg (five pounds) of Hi-Sil was added to the dispersion of seeds while agitating the autoclave contents by a stirrer at 250 rpm.

An aluminate solution was prepared by dissolving 482 g. of $Al_2(SO_4)_3 . 14H_2O$ and 600 g. NaOH in 4.5 kg (10 pounds) of water. The aluminate solution was added to the autoclave with continued agitation and an additional 2.5 kg (5.5 pounds) of Hi-Sil were added to thicken the mixture. The mixture was aged at room temperature for 16 hours while agitating at 90 rpm and was then heated to 150°C under autogenous pressure and 90 rpm agitation continued until crystallization was complete after 24 hours.

The product was discharged from the autoclave, filtered and washed with water to yield 4060 grams of crystalline product which was examined by X-ray powder diffraction and found to be 100% ZSM-5. Examination by scanning electron microscope revealed platelet crystals of 0.2 to 1.0 micron as the maximum dimension arranged in clusters of such platelets connected along edges of the platelets. Figure 1 annexed hereto is the scanning electron micrograph of that product at magnification of 5000.

The crystalline product of this example was converted to the hydrogen form by ion exchange with ammonium nitrate followed by calcination. This specimen of ZSM-5 is free of the organic cations which characterize conventional ZSM-5 made by the aid of such organics as tetraalkylammonium compounds. Such "non-organic" ZSM-5 is readily ion exchanged to completion without the intermediate calcination to destroy organic cations found necessary with the older organic form of ZSM-5.

### Example 2

The preparation of Example 1 was repeated except that the amount of sodium hydroxide used was 704 grams. Again the product was 100% ZSM-5 by X-ray powder diffraction and showed the characteristic clusters of platelet crystals. Figure 2 of the drawings is the scanning electron micrograph of this product at 5000 magnification.

### Example 3

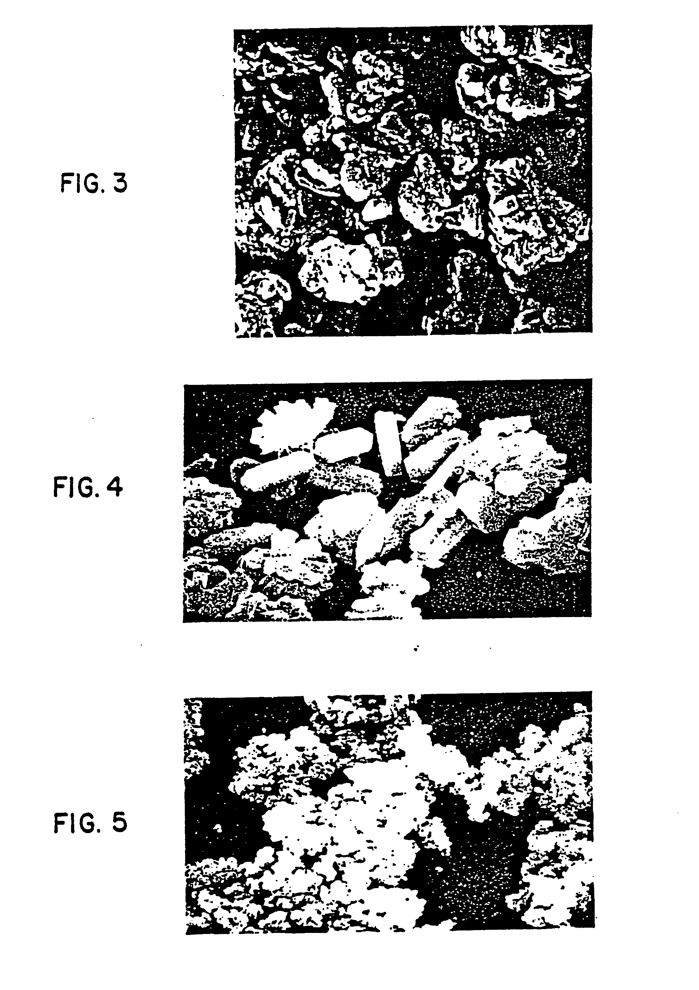

For comparative purposes, Figure 3 of the annexed drawings is a scanning electron micrograph of ZSM-5 at 10,000 diameters prepared from sources of silica, alumina and sodium oxide plus a quaternary compound prepared in situ by including tripropylamine and propyl bromide in the reaction mixture. Table 1 below compares the acid activity and steam stability of this conventional ZSM-5 and the product of Example 2 after both were ion exchanged with ammonium solution and air calcined to generate the hydrogen form of the zeolites. Activity is reported in Table 1 on the alpha scale described by Weisz et al. Jour. Catal. *4*, 527—529 (1965).

For further comparison, Figures 4 and 5 of the annexed drawings are scanning electron micrographs of ZSM-5 at 5000 magnification prepared in accordance with the disclosures of Plank et al. patent 4,175,114 from sources of silica, alumina, sodium oxide and seeds of ZSM-5 in the reaction mixture. The reaction mixture for the ZSM-5 of Figure 4 contained added ethanol while that for the ZSM-5 of Figure 5 contained no added organic material.

Example 4

Large crystal size zeolite ZSM-5 (0.5—2 microns) was prepared by the procedure of Example 2 but using larger size seed crystals in the range of 0.2 ot 0.5 microns. The formulation and crystallization conditions are otherwise the same as in Example 2. Activity and steam stability of this product are shown in Table 1.

Example 5

This example illustrates crystalline size control for small crystals. A seeding solution was prepared by dispersing 250 g of ZSM-5 seed (0.02—0.05 microns) in 16 lbs of $H_2O$. An aluminate solution was prepared by dissolving 482 g of aluminium sulfate (17.2 wt.% $Al_2O_3$) and 704 g NaOH in 10 lbs of $H_2O$. Ten and a half pounds of Hi-Sil were mulled together with the above seed dispersion for one hour. The mulling mixture was transferred to an agitated autoclave to which aluminate solution was added earlier. The crystallization was complete within 18 hours at 121°C (250°F) with 90 rpm agitation. The filtered, washed and dried product was 90% ZSM-5. The crystal size was shown by scanning electron microscope to be 0.02—0.1 microns.

TABLE 1

Activity and Steam Stability of ZSM—5

| | Example 3 (conventional) | | Example 2 | | Example 4 | |
|---|---|---|---|---|---|---|
| Silica /Alumina Ratio, Molar | 70 | | 70 | | 70 | |
| Crystal Size, microns | 0.2—0.5 | | 0.2—1.0 | | 0.5—2.0 | |
| Air Calcined Activity, alpha | ←————————— 3 hours at 1000°F. —————————→ | | | | | |
| | 185 | | 207 | | 279 | |
| Calcined and Steamed Temp., °C (°F) | 427 (800) | 538 (1000) | 427 (800) | 538 (1000) | 427 (800) | 538 (1000) |
| Hours | 4 | 4 | 4 | 4 | 4 | 4 |
| % Steam | 100 | 100 | 100 | 100 | 100 | 100 |
| Activity, alpha | 193 | 32 | 387 | 39 | 682 | 82 |

Claims

1. A process for preparing a zeolite having a constraint index in the range of 1 to 12, a silica/alumina mole ratio of at least 12 and a nitrogen content of less than 0.2% wt. in the water-washed, uncalcined state which comprises forming an intimate mixture of seed crystals of that zeolite, colloidal silica and water in which mixture no alkali or non-colloidal silica added as such is present and the weight ratio of seeds to silica is in the range 1:200 to 1:10, adding aqueous alkali to said mixture to form an aqueous reaction mixture of pH 7.5 to 13 conducive to formation of said zeolite, and hydrothermally reacting said reaction mixture with agitation until crystals of the zeolite are formed.

2. A process according to claim 1 wherein the mole ratio $SiO_2/(SiO_2+H_2O)$ of said reaction mixture is from 26 to 40.

3. A process according to claim 1 or claim 2 wherein said reaction mixture contains, on a seed-free basis, no more than 85% wt. of water.

4. A process according to any preceding claim wherein said intimate mixture is formed by mulling.

5. A process according to any preceding claim wherein said intimate mixture contains no alumina added as such.

6. A process according to any preceding claim wherein said reaction mixture contains no organic cations other than such as may have been added already associated with said seed.

7. A process according to any preceding claim wherein the hydrothermal reacting is at a temperature of 75 to 200°C under autogenous pressure.

8. A process according to any preceding claim wherein said intimate mixture contains 5 to 15% by weight of water.

9. A process according to any of claims 1 to 8 wherein the particle size of the seeds is in the range 0.02 to 0.05 μm.

10. A process according to any of claims 1 to 8 wherein the particle size of the seeds is in the range 0.2 to 0.5 μm.

11. A process according to any preceding claim wherein the seed is of zeolite ZSM-5, -11, -12, -35 or -38.

12. A process according to any preceding claim wherein, in place of silica, there is employed the oxide of a different element capable of tetrahedral coordination in a zeolitic lattice.

## Patentansprüche

1. Verfahren zur Herstellung eines Zeoliths mit einem Zwangsindex im Bereich von 1 bis 12, einem Siliciumdioxid/Aluminiumoxid/Molverhältnis von mindestens 12 und einem Stickstoffgehalt von weniger als 0,2 Gew.-% im mit Wasser gewaschenen, unkalzinierten Zustand, welches die Bildung einer innigen Mischung von Saat-Kristallen des Zeoliths, colloidalem Siliciumdioxid und Wasser, wobei in dieser Mischung kein zugegebenes Alkali oder nicht colloidales Siliciumdioxid als solches vorhanden ist und das Gewichtsverhältnis der Saat-Kristalle zum Siliciumdioxid im Bereich von 1:200 bis 1:10 beträgt, das Zugeben von wässrigem Alkali zu dieser Mischung, um eine wässrige Reaktionsmischung mit einem pH-Wert von 7,5 bis 13 zu schaffen, der für die Bildung des Zeoliths förderlich ist und hydrothermale Reaktion der Reaktionsmischung unter Rühren umfaßt, bis die Kristalle des Zeolithen gebildet sind.

2. Verfahren nach Anspruch 1, worin das Molverhältnis $SiO_2/(SiO_2+H_2O)$ der Reaktionsmischung von 26 bis 40 beträgt.

3. Verfahren nach Anspruch 1 oder 2, worin die Reaktionsmischung bezogen auf eine saatfreie Basis nicht mehr als 85 Gew.-% Wasser enthält.

4. Verfahren nach einem der vorstehenden Ansprüche, worin die innige Mischung durch Pulverisieren gebildet wird.

5. Verfahren nach einem der vorstehenden Ansprüche, worin die innige Mischung kein zugegebenes Aluminiumoxid als solches enthält.

6. Verfahren nach einem der vorstehenden Ansprüche, worin die Reaktionsmischung keine organischen Kationen enthält als die, die bereits mit den Saat-Kristallen verbunden zugegeben werden können.

7. Verfahren nach einem der vorstehenden Ansprüche, worin die hydrothermale Reaktion bei einer Temperatur von 75 bis 200°C unter autogenem Druck stattfindet.

8. Verfahren nach einem der vorstehenden Ansprüche, worin die innige Mischung 5 bis 15 Gew.-% Wasser enthält.

9. Verfahren nach einem der Ansprüche 1 bis 8, worin die Partikelgröße der Saat-Kristalle im Bereich von 0,02 bis 0,05 μm liegt.

10. Verfahren nach einem der Ansprüche 1 bis 8, worin die Partikelgröße der Saat-Kristalle im Bereich von 0,2 bis 0,5 μm liegt.

11. Verfahren nach einem der vorstehenden Ansprüche, worin die Saat-Kristalle Zeolith ZSM-5, -11, -12, -35 oder -38 sind.

12. Verfahren nach einem der vorstehenden Ansprüche, worin anstelle von Siliciumdioxid das Oxid eines davon verschiedenen Elementes eingesetzt wird, das zur tetraedrischen Koordination in einem Zeolithgitter in der Lage ist.

## Revendications

1. Un procédé de préparation d'une zéolite présentant un indice de contrainte compris entre 1 et 12, un rapport molaire silice/alumine au moins égal à 12 et une teneur en azote inférieure à 0,2% en poids, lorsqu'elle est lavée à l'eau et non calcinée, qui comprend la formation d'un mélange intime de germes cristallins de cette zéolite, de silica colloïdale et d'eau, mélange dans lequel ne se trouve ni alcali, ni silice à l'état non colloïdal ajoutée telle quelle, et le rapport pondéral des germes de cristaux à la silica étant compris entre 1/200 et 1/10, l'addition d'alcali aqueuse audit mélange pour former un mélange réactionnel aqueux présentant un pH compris entre 7,5 et 13 favorable à la formation de ladite zéolite et la réaction hydrothermique dudit mélange réactionnel sous agitation jusqu'à ce que des cristaux de la zéolite soient formés.

2. Un procédé selon la revendication 1, dans lequel le rapport molaire $SiO_2/(SiO_2+H_2O)$ dudit mélange réactionnel est compris entre 26 et 40.

3. Un procédé selon la revendication 1 ou la revendication 2, dans lequel ledit mélange réactionnel ne contient pas plus de 85% en poids d'eau, en l'absence de germes.

4. Un procédé selon l'une quelconque des revendications précédentes, dans lequel ledit mélange intime est formé par mise en pâte.

5. Un procédé selon l'une quelconque des revendications précédentes, dans lequel ledit mélange intime ne contient pas d'alumine ajoutée telle quelle.

6. Un procédé selon l'une quelconque des revendications précédentes, dans lequel ledit mélange réactionnel ne contient aucun cation organique autre que ceux qui ont pu être ajoutés en même temps que ledit germe auxquels ils étaient déjà associés.

7. Un procédé selon l'une quelconque des revendications précédentes, dans lequel la réaction hydrothermique est réalisée à une température comprise entre 75 et 200°C sous une pression autogène.

8. Un procédé selon l'une quelconque des revendications précédentes, dans lequel le mélange intime contient entre 5 et 15% en poids d'eau.

9. Un procédé selon l'une quelconque des revendications 1 à 8, dans lequel la taille de particules des germes se trouve comprise entre 0,02 et 0,05 micron.

10. Un procédé selon l'une quelconque des revendications 1 à 8, dans lequel le taille de particules des germes se trouve comprise entre 0,2 et 0,5 micron.

11. Un procédé selon l'une quelconque des revendications précédentes, dans lequel le germe est de la zéolite ZSM-5, ZSM-11, ZSM-12, ZSM-35 ou ZSM-38.

12. Un procédé selon l'une quelconque des revendications précédentes, dans lequel à la place de silice, on emploie l'oxyde d'un élément différent capable de se coordonner tétraédriquement dans le réseau zéolitique.

## FIG. 1

## FIG. 2

FIG. 3

FIG. 4

FIG. 5